# DEMANDE DE BREVET EUROPEEN

(11) **EP 0 961 377 A1**
(43) Date de publication de la demande: **01.12.1999**
(21) Numéro de dépôt: 99401341.5
(22) Date de dépôt: 28.05.1999
(51) Int. Cl.: H02B 1/28

(54) **Armoire logeant des appareillages électriques**

(30) Priorité: 28.05.1998 FR 9806778
(71) Demandeur: Schneider Electric Industries SA, 92100 Boulogne Billancourt (FR)
(72) Inventeur: Dumont Dipuis, Michel, Ing., 08022 Barcelone (ES); Niubo Mana, Javier Ing., 08950 Esplugas de Llobregat (ES)

(57) **Abrégé**

Enveloppe destinée à loger des appareillages électriques comprenant un corps qui définit un cadre 17 délimitant une ouverture 15, et une paroi 20,14 apte à fermer l'ouverture, le cadre étant doté d'une arête périphérique 18 qui est saillante vers l'extérieur de l'armoire dans une direction sensiblement orthogonale à la paroi 20,14, est incurvée aux coins du cadre et sur laquelle est encastré un joint d'étanchéité souple 30.

Le joint 30 a une partie en forme de U qui s'emboîte sur l'arête 18 et un bras 32, notamment pivotant, qui s'applique dans une rainure périphérique 23 de la paroi 20. L'arête 18 est bordée par une gouttière 19. L'étanchéité est ainsi renforcée notamment en cas de projection d'eau.

## Description

La présente invention concerne une enveloppe telle qu'une armoire, un coffret ou une autre enveloppe analogue, destinée à loger des appareillages électriques et comprenant un corps qui définit un cadre délimitant une ouverture, ainsi qu'une paroi destinée à fermer l'ouverture.

Il est connu de réaliser une fermeture étanche de l'ouverture par la disposition d'un joint sur une arête périphérique du cadre, en saillie vers l'extérieur de l'enveloppe, le joint étant destiné à coopérer avec une face interne de la paroi, celle paroi pouvant être une porte, un couvercle ou autre paroi analogue. Toutefois, la manipulation fréquente de la porte et sa rigidité relative occasionnent généralement une usure rapide du joint, ce qui engendre des défauts d'étanchéité.

L'invention a par conséquent pour but d'améliorer la garantie d'étanchéité, notamment en cas de projection d'eau, et de proposer un système d'étanchéité facile et rapide à installer lors de la fabrication de l'enveloppe.

Selon l'invention, le joint d'étanchéité souple a une partie de fixation et une partie d'étanchéité, la partie de fixation étant en forme de U et s'emboîtant, notamment par pincement, sur l'arête, la paroi présentant sur sa face interne une conformation périphérique, par exemple une rainure, contre laquelle peut s'appliquer la partie d'étanchéité.

L'encastrement du joint sur l'arête permet d'épouser correctement les formes du cadre, en particulier lorsque le cadre a des coins arrondis, et l'étanchéité aux projections d'eau peut être améliorée grâce au débattement du bras dans la rainure, en particulier lorsque celui-ci est articulé à la partie de fixation du joint de manière à pivoter. Cette faculté de pivotement peut être accentuée par une échancrure ménagée dans le joint au niveau du raccordement du bras avec la partie de fixation, et l'étanchéité peut être accrue par l'existence d'une gouttière du cadre délimitée par une nervure du cadre adjacente à l'arête qui porte le joint.

La partie de fixation du joint peut présenter une aile dont la face externe est située sensiblement dans l'alignement d'une face interne du cadre adjacente et parallèle à l'arête, afin d'éviter d'accrocher le joint lorsqu'on effectue des manipulations à l'intérieur de l'enveloppe.

Les parois de l'enveloppe peuvent avantageusement être assemblées en tant que ceinture, en présentant vers l'avant et vers l'arrière des arêtes portant des joints semblables, de préférence identiques, pour coopérer respectivement avec une porte avant et un panneau arrière.

L'invention va à présent être décrite en regard des dessins annexés, parmi lesquels :
- la figure 1 est une vue en perspective de l'enveloppe selon l'invention;
- la figure 2 est une vue en coupe du joint d'étanchéité;
- la figure 3 est une vue en coupe d'une partie de l'enveloppe;
- la figure 4 montre en perspective éclatée de l'enveloppe.

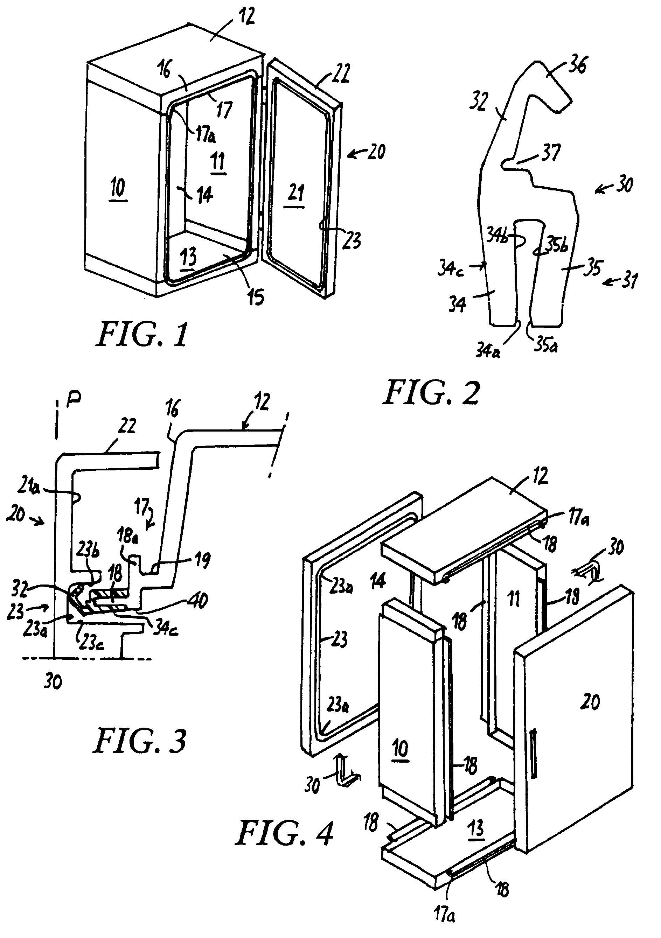

L'enveloppe 1 illustrée sur la figure 1 comprend des parois latérales 10,11, une paroi de toit 12, une paroi de fond 13 ainsi qu'un panneau arrière 14 et, pour fermer une ouverture avant 15 délimitée par des bord rabattus 16 venus des parois 10-13, une porte pivotante 20. La porte 20 est montée sur des charnières non indiquées qui sont associées au bord 16 d'une paroi latérale 10 ou 11. Les parois 10,11, le panneau 14 et la porte 20 sont verticales. L'enveloppe est de préférence en matière plastique, mais pourrait aussi être métallique ; l'appellation "enveloppe" désigne des armoires, coffrets ou autres enveloppes analogues destinées à loger des appareillages électriques. Les parois 10-13 sont moulées individuellement, puis assemblées pour former une ceinture à laquelle on assemble le panneau arrière 14 et la porte 20 au moyen des joints d'étanchéité décrits par la suite

La porte 20 est constituée par un panneau 21 de plan vertical P qui présente sur sa périphérie un bord 22 rabattu sensiblement perpendiculairement au plan P vers l'intérieur de l'armoire. Une conformation périphérique 23 est ménagée sur la face interne 21a du panneau 21 avec au moins un fond 23a parallèle au plan P et une face horizontale adjacente 23b, perpendiculaire au plan P et à la paroi adjacente 12 (figure 3). Cette conformation 23 est de préférence une rainure ou gorge délimitée aussi par une autre face 23c parallèle à la face 23b.

Les bords rabattus verticaux 16 délimitant l'ouverture 15 constituent un cadre 17 à coins arrondis qui est ménagé sur le pourtour de l'ouverture 15. Le cadre 17 présente sur son bord périphérique une arête 18 qui est saillante vers l'extérieur de l'enveloppe et dans une direction sensiblement orthogonale au plan P de la porte en position fermée. Le cadre 17 présente prés de l'arête 18 une nervure 18a sensiblement perpendiculaire à l'arête 18 de façon à ménager entre cette nervure et le bord 16 une gouttière d'évacuation d'eau 19 dont le fond est parallèle à la paroi 10-13. L'arête 18 est arrondie aux quatre angles du cadre et la nervure 18a, ainsi que la gouttière 19, sont prévues au moins sur trois côtés, ici sur les quatre côtés, du cadre.

Un joint d'étanchéité 30 est encastré sur l'arête 18 pour recouvrir le périmètre du cadre, sa pose étant facilitée par l'arrondi des coins de l'arête 18. Il est destiné à coopérer avec la porte 20 pour assurer une fermeture étanche de l'ouverture 15. Le joint est souple et est en matière synthétique du type polymère. Un joint identique est prévu dans les mêmes conditions pour assurer une fixation étanche du panneau arrière 14 aux parois 10-13, ce qui est décrit pour la porte s'appliquant aussi au panneau arrière fixe.

Le joint 30 illustré figure 2 comprend une partie 31 de fixation en forme de U et une partie d'étanchéité constituée par un bras souple 32 orienté à l'opposé du centre de l'ouverture 15. La partie de fixation 31 comporte une âme 33 et deux ailes 34, 35 qui sont raccordées à l'âme pour constituer une pince élastique apte à s'emboîter et se serrer de manière étanche sur l'arête 18 (figure 3). La partie de fixation 31 du joint est en outre maintenue définitivement sur l'arête 18 par des moyens de collage. Les extrémités libres 34a et 35a des faces internes respectives 34b et 35b des ailes sont chanfreinées de manière à élargir l'écartement e de l'extrémité des deux ailes pour faciliter l'engagement du joint sur l'arête 18. La branche 34 a une face externe 34c sensiblement située au niveau d'une face interne 40 du cadre 17qui est adjacente et paralléle à l'arête 18, ceci permettant d'éviter à un opérateur qui intervient à l'intérieur du corps d'accrocher le joint.

Le bras 32 du joint prolonge l'aile 34 et est légèrement incurvé en direction de l'âme. Il présente vers son extrémité libre une portion coudée 36 pliée en crosse en direction de l'âme 33 de manière sensiblement perpendiculaire par rapport à la longueur du bras. .Une échancrure 37 est ménagée au raccordement du bras 32 avec l'âme 33, ce qui permet au bras de pivoter et se plier de façon que, en position fermée de la porte, la crosse 36 soit appliquée contre le fond, ou l'un des angles 24 du fond, de la rainure 23. Il en résulte une excellente étanchéité, particulièrement en cas de projection d'eau, puisque la pression s'exerce alors sur le bras dans un sens renforçant son application dans la rainure, du fait que le bras est dirigé de manière à pivoter alors vers le centre de l'ouverture 15. Par ailleurs, le bras 32 pliable permet d'absorber des différences de cote entre l'arête 18 et la face interne 21a de fa porte.

On peut noter que l'enveloppe comprend une ceinture formée par assemblage des parois 10-13 entre elles. Une même paroi 10-13 comprend sur son côté avant et sur son côté arrière des arêtes respectives 18 de manière que la ceinture 10-13 reçoive deux joints 30 contre lesquels vont s'appliquer à l'avant la porte 20 et à l'arrière le panneau arrière 14, ces joints étant de préférence identiques.

L'arête 18 propre à chaque paroi 10-13 forme une partie du périmètre de l'arête portant le joint, les parois de toit 12 et de fond 13 étant dotées d'arêtes 18 dont les extrémités sont incurvées pour assurer une forme incurvée du joint 30 aux coins 17a du cadre, en combinaison avec une forme incurvée correspondante des coins 23a de la rainure 23.

## Revendications

1. Enveloppe destinée à loger des appareillages électriques, telle qu'armoire ou coffret, comprenant un corps qui définit un cadre (17) délimitant une ouverture (15), et une paroi (20,14) apte à fermer l'ouverture, le cadre (17) étant doté d'une arête périphérique (18) qui est saillante vers l'extérieur de l'armoire dans une direction sensiblement orthogonale à la paroi et sur laquelle est encastré un joint d'étanchéité souple (30) contre lequel peut s'appliquer la paroi,
*caractérisée en ce que* le joint d'étanchéité souple (30) a une partie de fixation (31) en forme de U qui s'emboîte sur l'arête (18) et une partie d'étanchéité (32), la paroi (20,14) présentant sur sa face interne (21a) une conformation périphérique (23) contre laquelle peut s'appliquer la partie d'étanchéité (32).

2. Enveloppe selon la revendication 1, caractérisée en ce que la partie d'étanchéité du joint (30) est un bras souple (32) articulé à sa partie de fixation (31) de manière à pouvoir pivoter dans la conformation périphérique (23).

3. Enveloppe selon la revendication 2, caractérisée en ce que le bras souple (32) du joint (30) est orienté de façon que son application contre la conformation périphérique soit accentuée en cas d'introduction d'eau sur la périphérie du cadre.

4. Enveloppe selon la revendication 2, caractérisée en ce qu'une échancrure (37) est ménagée sur la tranche interne (32a) du bras pivotant (32) au niveau de son raccordement avec la partie de fixation (31).

5. Enveloppe selon la revendication 2, caractérisée en ce que la conformation périphérique est une rainure périphérique (23) et en ce que le bras pivotant (32) se termine par une portion coudée en crosse (36) logée dans le fond de la rainure.

6. Enveloppe selon la revendication 1, caractérisée en ce que la partie de fixation (31) en forme de U présente une aile (34) dont la face externe (34c) est située sensiblement dans l'alignement d'une face interne (40) du cadre (17) adjacente et parallèle à l'arête (18).

7. Enveloppe selon la revendication 1, caractérisée en ce que le cadre (17) présente prés de l'arête (18) une nervure (18a) sensiblement perpendiculaire à l'arête (18) et bordant une gouttière (19).

8. Enveloppe selon la revendication 1, caractérisée en ce qu'elle comprend une ceinture formée par des parois (10-13) à laquelle sont assemblés une porte (20) et un panneau arrière (14) et en ce qu'une même paroi (10-13) comprend sur son côté avant et sur son côté arrière des arêtes respectives (18) de manière à recevoir deux joints (30) appliqués l'un contre la porte (20) et l'autre contre le panneau arrière (14).

9. Enveloppe selon la revendication 8, caractérisée en ce que les joints (30) appliqués contre la porte (20) et contre le panneau arrière (14) sont identiques.

10. Enveloppe selon la revendication 1, caractérisée en ce qu'elle comprend une ceinture constituée par assemblage de parois individuelles (10-13) ménageant chacune une partie du périmètre de l'arête (18) avec incurvation de celle-ci aux coins du cadre (17).
